# EUROPEAN PATENT APPLICATION

(11) **EP 0 686 457 A1**
(43) Date of publication of application: **13.12.1995**
(21) Application number: 95108736.0
(22) Date of filing: 07.06.1995
(51) Int. Cl.: B23K 35/14

(54) **Braze filler metal alloy flexible tape**

(30) Priority: 08.06.1994 US 257242
(71) Applicant: PRAXAIR S.T. TECHNOLOGY, INC., Danbury, Connecticut 06810-5113 (US)
(72) Inventor: Hermanek, Frank John, Indianapolis, Indiana 46214 (US)
(74) Representative: Schwan, Gerhard, Dipl.-Ing.

(57) **Abstract**

A braze filler metal alloy tape containing braze metal alloy powders, such as a nickel- or cobalt-based braze filler metal, homogeneously dispersed throughout an aqueous dispersion comprising a binder, such as polyvinyl butyral, and plasticizers, such as butyl recinoleate and potassium oleate. The method for producing the tape is also disclosed.

## Description

### Field of the Invention

The invention relates to a braze filler metal alloy flexible tape that comprises braze metal alloy powders dispersed in a solid gel containing a binder and a dispersant and also relates to a method for producing the braze filler metal alloy flexible tape.

### Background of the Invention

Brazing is a group of welding processes wherein the filler metal is generally a non-ferrous metal or alloy whose melting point is higher than 840°F, but lower than that of the metal or alloys to be joined. At one extreme, brazing is similar to soldering and is sometimes called hard soldering. Joints to be soldered are usually designed to require a thin film of filler metal which is drawn into the joint by capillary action when the solder becomes molten. This principal is also used in brasing in that a high-temperature process uses a brazing material to join close-fitting parts, such as steel parts. Most forms of brazing depend on local heating with a torch or by other means while some brazing is generally done in a furnace in which the parts are heated to a high temperature such as 1600°F. Another type of brazing is similar to welding in many respects and is sometimes called bronze welding. The joints are generally V-shaped in which a bead of filler metal is deposited. This technique differs from welding in that the base metal is not melted but only raised to the "tinning" temperature at which bonding takes place between the base metal and the filler metal by slight interdiffusion or alloying.

Braze filler metal pastes are generally custom blends of filler metal with a chemical neutral gel. A majority of the gels used in braze filler metal pastes employ organic solvent-based binders in which the solvent could be toluene, methyl ethyl ketone, acetone, alcohols, trichloroethane, and the like. Many of these organic solvents are hazardous to both personal health and the environment. Brazing cements for use with powdered brazing filler metals are commercially available in many different viscosities. The brazing cement could be a liquid plastic that provides a means of applying powdered brazing filler metals in an easy-to-use liquid powder mixture. The brazing cement acts as both a vehicle and a binder so that when mixed with a powdered brazing filler metal, the mixture can be applied by a brush, eyedropper, syringe, spray gun or the like to specific areas to be bonded. The viscosity of the cement for use will depend on the amount of filler metal required in a joint area. The more viscous the cement, the more filler metal can be carried.

Metal alloys can also be formed into a flat sheet in which the metal alloy is dispersed in a liquid. The liquid contains dissolved organic binders and plasticizing modifiers all diluted in a solvent system. Specifically, a slurry of a metal alloy dispersed in a solution containing at least a binder, plasticizer and solvent is spread on a flat sheet whereupon the solvent evaporates. This produces a pliable sheet of a metal alloy dispersed in a binder matrix. The sheet may then be cut into a strip to form a metal alloy flexible tape. The stripped tape may be kept flat and cut into useful lengths for handling or storage. The stripped tape may also be coiled up on spools for storage.

In tape casting there is usually a spreader or doctor blade that determine the thickness of the tape. The doctor blade is adjustable in height so layers of different thickness may be formed. The bottom surface of the tape is determined by the substrate or carrier surface. This is usually mylar or plastic film. Casting is accomplished by a relative movement of the doctor blade with respect to the carrier surface. The carrier may move under a fixed doctor blade or the blade may be moved over the surface of the fixed carrier. In a continuous-casing system a carrier could be moved under a doctor blade and through a drying tunnel. The slurry is first fed onto the carrier, leveled by the doctor blade and carried into a drying tunnel. The drying tunnel is equipped with ventilation controls for exhaust of solvent-laden air and for receiving fresh air. The drying chamber could be heated by electric heaters mounted under the carrier and may be supplemented by heated inlet air.

Upon exiting the drying tunnel, the dried tape is then rolled upon itself, either with or without the carrier. Also, prior to rolling, an adhesive layer may be added to either one or both sides of the tape.

After the tape is rolled, it may be introduced into a slitter which will make accurate strips of the tape. Wide tapes may be slit into more narrow, usable widths and lengths. The stripped tape may also be kept flat and cut into useful lengths for handling and storage. Casing speeds will vary considerably according to drying length, permitted dwell time, thickness of the tape and nature of the solvent system.

Too rapid drying of the wet slurry may cause the surface to become sealed against further removal of solvents. This response may then result in trapping of gas bubbles in the drying tape. Preventing the surface from sealing or skinning is accomplished by utilizing the humidity drying principle long practiced in the structural clay industry. Essentially, this procedure consists of introducing the wet, newly cast tape into a warming chamber containing a high concentration of the solvent. This concentration will limit evaporation of solvent from the slurry while permitting migration of the solvent to the surface. After the system has stabilized at the higher temperature and with the high-solvent gas concentration, exhausting of the solvent may proceed without danger of skinning or bubble entrapment. Obviously, careful control of both the temperature and volume of the inlet and exhaust air is important in this first stage of the drying process. Many of these processes use organic solvents that are hazardous to both personal health and the environment.

It is an object of the present invention to provide a braze filler metal alloy tape comprising braze metal powder dispersed in a gel composed of a binder and a plasticizer that is not hazardous to the environment or personal health.

Another object of the present invention is to provide a braze filler metal alloy tape that can be wound or coiled onto a spool or the like for storage so that strips of the tape can be removed when needed.

Another object of the present invention is to provide a method for producing a braze filler metal alloy tape.

Another object of the present invention is to provide a braze filler metal tape that is cost effective to produce and easy to use.

The above and further objects will become apparent upon consideration of the following description.

### Summary of the Invention

The invention relates to a braze filler metal alloy tape comprising at least one braze filler metal alloy powder homogeneous dispersed in a gel matrix, said braze filler powder present in an amount from 85 to 98.5 weight percent based on the weight of the tape, preferably 90 to 98 and most preferably 95 to 96 weight percent based on the weight of the tape, and the remainder being the gel matrix comprising a binder and a plasticizer; said gel matrix comprising 10 to 90 weight percent of at least one plasticizer based on the weight of the binder and 10 to 90 weight percent of at least one binder based on the weight of the plasticiser. Preferably, the plasticizer should be present in an amount of from 25 to 75 weight percent, based on the weight of the binder and the binder should be from 25 to 75 weight percent based on the weight of the plasticizer, more preferably the plasticizer should be about 50 weight percent based on the weight of the binder and the binder should be about 50 weight percent based on the weight of the plasticizer.

As used herein, a binder is a material that is used to hold solid particles together. Suitable binders for use in this invention are various aqueous emulsion materials such as aqueous dispersions of polyvinyl butyral and aqueous acrylic polymers.

As used herein, a plasticizer is a material that softens the tape and facilitates or helps disperse particles, such as powders, throughout a viscous solution. Suitable plasticizers for use in this invention are butyl ricinoleate and potassium oleate.

Suitable braze filler metal and metal alloys for use in this invention include nickel-based braze filler metals, cobalt-based braze filler metals, gold, silver and palladium. Suitable samples of both nickel- and cobalt-based braze filler metals are shown in the table.

| Sample | Nominal Chemical Composition (percent by weight) | Recommended Brazing Ranges | |
|---|---|---|---|
| | | F | C |
| A | Ni-15Cr-3.5B | 1950-2100 | 1066-1150 |
| B | Ni-3.5Si-15Cr-22Co-2.8B | 2075-2200 | 1135-1205 |
| C | Ni-0.8C-4.5Si-14Cr-3B-4.5Fe | 1900-2200 | 1066-1204 |
| D | Ni-4.5Si-14Cr-3B-4.5Fe | 1970-2200 | 1077-1204 |
| E | Ni-4.5Si-7Cr-3B-3Fe | 1830-2150 | 1010-1177 |
| F | Ni-4.5Si-3B | 1850-2150 | 1010-1177 |
| G | Ni-3.5Si-1.8B | 1950-2150 | 1010-1177 |
| H | Ni-10Si-19Cr | 2100-2200 | 1147-1204 |
| I | Co-8Si-19Cr-17Ni-4W-0.8B | 2100-2250 | 1149-1232 |

Sample A is a silicon free filler metal alloy that is suitable for diffusion brazing applications and where service conditions cannot tolerate silicon. This filler metal alloy exhibits excellent strength and high temperature oxidation resistance.

Sample B is an excellent filler metal alloy for use in applications with tight tolerances and thin sections. The cobalt addition promotes base metal wetting and braze alloy solid solution. Resulting joints demonstrate excellent fatigue resistance.

Sample C filler metal alloy yields high strength joints suitable for elevated temperature applications. This alloy is recommended for the joining of gas turbine hardware.

Sample D filler metal alloy is chemically similarly to Sample C except for a lower carbon content. This alloy reduces tendencies to form carbides and since it is sluggish, it is recommended for wide gap applications in environments requiring resistance to chemical attack.

Sample E full metal alloy, while exhibiting properties similar to those encountered with Sample C, permits brazing at much lower temperatures. This alloy has excellent flow characteristics while not contributing to either IGA (InterGranular Attach) or other base metal dilutions and is suited for joining thin sections as encountered with heat exchanger and honeycomb components.

The invention also relates to a method for producing a braze filler metal alloy tape comprising the steps:
(a) preparing an aqueous gel comprising a mixture of water along with at least one binder and at least one plasticizer, said water present in an amount of between 35 to 60 weight percent based on the weight of the gel, preferably between 41 and 50 and most preferably between 43 and 47 weight percent based on the weight of the gel, said binder present in an amount between 10 and 90 weight percent based on the weight of the plasticizer, and said plasticizer present in an amount between 10 to 90 weight percent based on the weight of the binder;
(b) mixing at least one braze filler metal or metal alloy powder into said gel of step (a) and depositing said mixture on a carrier sheet;
(c) removing the aqueous liquid to form a solid sheet of the at least one braze filler metal or metal alloy dispersed and secured in the matrix gel. The solid braze filler metal or metal alloy sheet may or may not then be removed from the carrier sheet and preferably formed into a strip or tape which can be coiled onto a suitable spool.

Final thickness of a dried tape will be dependent on the resulting shrinkage during drying. The dried tape thickness will depend on the solids content of the mixture at the doctor blade, the viscosity of the mixture, the casting rate, and the doctor blade height. All of these conditions must be controlled to get reproducible tapes.

If excess solvent (such as water) is introduced or if the mixture has too much solvent as evidenced by too low a viscosity after rasing the temperature to the high-ambient casting temperature, the excess solvent should be removed before casting. While the true condition of the mixture with excess solvent will be that of lowered solids content, the solids effect will be noticed in lowered viscosity. This means that the viscosity of the mixture must be measurable and controllable. A system to accomplish this consists of a temperature-controlled pressure vessel wherein the viscosity of the mixture may be constantly monitored and a vacuum pump that will permit de-airing and evaporation of any excess solvent such as water and/or entrapped air.

To produce the tape, the mixture is placed in a pressure vessel that is evacuated until the viscosity increases to the optimal level indicating removal of excess solvent and the evacuation is continued until the solvent and/or air is substantially removed. If these steps are repeated carefully, the resulting cast tape should be of constant quality.

For most applications, the braze filler metal alloy powder could be sized between 5 and 125 microns, preferably between 9 and 75 microns, and most preferably between 11 and 45 microns. The amount of braze filler metal alloy powder in the aqueous mixture should be between 75 and 98 weight percent, preferably between 85 and 98 weight percent and most preferably between 95 and 98 weight percent based on the weight of the gel mixture. The binder and plasticizer of the gel mixture should be between 45 and 65 weight percent, preferably between 45 and 60 weight percent and most preferably between 56 and 58 weight percent based on the weight of the gel mixture. The gel component of the mixture preferably comprises water, preferably deionized water, in an amount of between 30 and 70 weight percent, preferably in an amount between 41 and 50 weight percent and most preferably between 43 and 47 weight percent based on the weight of the gel mixture. The plasticizer should be present in an amount between 10 and 90 weight percent, preferably an amount between 25 and 75 weight percent, most preferably about 50 weight percent based on the weight of the binder; and the binder in an amount between 10 and 90 weight percent, preferably between 25 and 75 weight percent and most preferably about 50 weight percent based on the weight of the plasticizer.

The final tape should preferably contain 85 to 98.5 weight percent braze filler metal alloy, 1.5 to 15 weight percent binder and plasticizer, all based on the weight of the tape. The tape should be sufficiently flexible so that it can be coiled on a conventional spool for storage and peeled off when needed.

### Example

A braze filler metal alloy mixture was prepared by first preparing a gel containing 46 weight percent water, 27 weight percent binder of polyvinyl butyral and 27 weight percent plasticizer of potassium oleate. Nickel-based braze filler metal powders, sized about 11 to 45 microns were mixed into the aqueous gel to form a mixture having 95 weight percent metal powders based on the weight of the mixture. The mixture was fed onto a carrier to a height of 0.010 inch using conventional doctor blade technology. The mixture was heated to 175°C to remove the water and once the mixture dried it was removed from the drying chamber as a braze filler metal alloy tape which was coiled onto a 4 inch diameter spool.

The braze filler metal alloy tape of this invention is non-hazardous to the environment and can be used in applications where a braze alloy is required to secure parts together. Though the invention has been described with respect to preferred embodiments thereof, many variations and modifications will become apparent to those skilled in the art. It is therefore the intention that the appendix claims be interpreted as broadly as possible in view of the prior art to include all such variations and modifications.

## Claims

1. A braze filler metal or metal alloy tape which comprises at least one braze filler metal or metal alloy powder homogeneously dispersed throughout a gel matrix, said braze filler metal or metal alloy powder present in an amount from 85 to 98.5 weight percent based on the weight of the tape with the remainder being the gel matrix which comprises at least one plasticizer and at least one binder and wherein said plasticer is present in an amount from 10 to 90 weight percent based on the weight of said binder, and said binder is present in an amount from 10 to 90 weight percent based on the weight of said plasticizer.

2. The braze filler metal or metal alloy tape of claim 1 wherein said braze filler metal or metal alloy powder is present in an amount from 90 to 98 weight percent based on the weight of the tape; said plasticizer is present in an amount from 25 to 75 weight percent based on the weight of said binder; and said binder is present in an amount from 25 to 75 weight percent based on the weight of said plasticizer.

3. The braze filler metal or metal alloy tape of claim 1 wherein said at least one plasticizer is selected from the group consisting of butyl ricinoleate and potassium oleate.

4. The braze filler metal or metal alloy tape of claim 1 wherein said at least one binder is selected from the group consisting of aqueous dispersion of polyvinyl butyrals and aqueous acrylic polymers.

5. The braze filler metal or metal alloy tape of claim 1 wherein said braze filler metal alloy powder is selected from the group consisting of nickel-based braze filler metals, cobalt-based braze filler metals, gold, silver and palladium.

6. The braze filler metal or metal alloy tape of claim 1 wherein the thickness of the tape is between 0.002 inch and 0.125 inch.

7. The braze filler metal alloy tape of claim 1 wherein said braze filler metal alloy powder is a nickel-based braze filler metal present in an amount of 85 to 98.5 weight percent based on the weight of the tape; said plasticizer is butyl ricinoleate and potassium oleate present in an amount of 10 to 90 weight percent based on the weight of said binder; and said binder is an aqueous dispersion of polyvinyl butyral present in an amount of 10 to 90 weight percent based on the weight of said plasticizer.

8. The braze filler metal alloy tape of claim 1 wherein said braze filler metal allow powder is a cobalt-based braze filler metal present in an amount of 90 to 98 weight percent based on the weight of the tape; said plasticizer is butyl ricinoleate and potassium oleate present in an amount of 10 to 90 weight percent based on the weight of said binder; and said binder is an aqueous dispersion of polyvinyl butyral present in an amount of 10 to 98 weight percent based on the weight of said plasticizer.

9. A method for producing a braze filler metal alloy tape comprising the steps:
(a) preparing an aqueous gel comprising at least one plasticizer, at least one binder and a solvent, said solvent present in an amount between 35 to 60 weight percent based on the weight of the aqueous gel; said binder present in an amount between 10 to 90 based on the weight of the binder, and said plasticizer present in an amount between 10 to 90 weight percent based on the weight of the plasticizer;
(b) mixing at least one braze filler metal alloy powder into said gel of step (a) and depositing said mixture on a carrier sheet;
(c) removing the aqueous solvent so that the gel makes a gel matrix for the dispersed powder to form a solid sheet of the at least one braze filler metal alloy dispersed in said gel matrix.

10. The method of claim 9 wherein the solid sheet of the at least one braze filler metal alloy dispersed in the gel matrix is removed from the carrier sheet and formed into a coiled tape.
